# EUROPÄISCHE PATENTSCHRIFT

(11) **EP 1 272 682 B1**
(45) Veröffentlichungstag und Bekanntmachung des Hinweises auf die Patenterteilung: **11.08.2004**
(21) Anmeldenummer: 01927803.5
(22) Anmeldetag: 26.03.2001
(51) Int. Cl.: C23C 4/12, B23K 9/04, B23K 9/09

(54) **VERFAHREN ZUR ERZEUGUNG EINES MATERIALAUFTRAGS AUF EINER OBERFLÄCHE**
METHOD FOR THE PRODUCTION OF A MATERIAL COATING ON A SURFACE
PROCEDE POUR APPLIQUER UN MATERIAU SUR UNE SURFACE

(30) Priorität: 24.03.2000 DE 10014353; 10.06.2000 DE 10028820
(43) Veröffentlichungstag der Anmeldung: 08.01.2003
(73) Patentinhaber: Sulzer Metco AG, 5610 Wohlen (CH)
(72) Erfinder: Jung, Werner, 73061 Ebersbach (DE)
(74) Vertreter: Sulzer Management AG
(86) Internationale Anmeldenummer: PCT/EP2001/003413
(87) Internationale Veröffentlichungsnummer: WO 2001/071053

(56) Entgegenhaltungen:
- EP-A- 0 435 673
- EP-A- 0 987 339
- DE-A- 2 002 472
- DE-A- 19 611 583
- FR-A- 2 329 098
- US-A- 3 637 974
- US-A- 4 453 073
- US-A- 4 876 433
- US-A- 5 965 038
- US-A- 5 990 445
- US-A- 6 001 426
- PATENT ABSTRACTS OF JAPAN vol. 013, no. 296 (M-846), 10. Juli 1989 (1989-07-10) & JP 01 087072 A (NIPPON STEEL CORP), 31. März 1989 (1989-03-31)
- PATENT ABSTRACTS OF JAPAN vol. 012, no. 222 (M-712), 24. Juni 1988 (1988-06-24) & JP 63 020168 A (NIPPON STEEL CORP), 27. Januar 1988 (1988-01-27)
- PATENT ABSTRACTS OF JAPAN vol. 014, no. 291 (M-0989), 22. Juni 1990 (1990-06-22) & JP 02 092464 A (NIPPON STEEL CORP), 3. April 1990 (1990-04-03)
- PATENT ABSTRACTS OF JAPAN vol. 013, no. 275 (C-610), 23. Juni 1989 (1989-06-23) & JP 01 073066 A (RYODA SATO), 17. März 1989 (1989-03-17)

## Beschreibung

Die Erfindung betrifft ein Verfahren zur Erzeugung eines Materialauftrags auf einer Oberfläche gemäß dem Oberbegriff des Anspruchs 1.

Bei derartigen Verfahren werden entweder Verfahren zum Lichtbogenspritzen oder Verfahren zum Lichtbogen-Auftragsschweißen eingesetzt, um den erwünschten Materialauftrag auf einer Oberfläche zu erhalten.

Bei einem Verfahren zum Lichtbogenspritzen werden zwei als Spritzdrähte ausgebildete Drähte gleicher oder unterschiedlicher Art mittels einer Vorschubeinrichtung in spitzem Winkel aufeinander zugeführt, so dass die Spitzen der Drähte in geringem Abstand gegenüberliegen. Zur Erzeugung eines Lichtbogens werden kontaktgebende Drahtführungen, in welchen die Vorderenden der Drähte geführt sind, mit einem Strom mit hinreichend großer Stromstärke versorgt. Die auf diese Weise im Lichtbogen ab-, aus- oder aufgeschmolzenen Spitzen der Spritzdrähte werden mittels eines Zerstäubergases gegen die Oberfläche geschleudert.

Bei einem Verfahren zum Lichtbogen-Auftragsschweißen, wie es beispielsweise aus der US 4,521,664 bekannt ist, werden zwei als Schweißdrähte ausgebildete Drähte mittels einer Vorschubeinrichtung in einem spitzen Winkel aufeinander zugeführt, so dass die Spitzen der Drähte in geringem Abstand gegenüberliegen. Zur Erzeugung eines Lichtbogens werden kontaktgebende Drahtführungen, in welchen die Vorderenden der Drähte geführt sind, mit einem Strom mit hinreichend großer Stromstärke versorgt.

Die in dem Lichtbogen ab-, an- oder aufgeschmolzenen Spitzen der Drähte werden mit der ebenfalls partiell angeschmolzenen Oberfläche verschweißt.

Aus dem Artikel "Mehrdraht-Lichtbogenspritzen von Fülldrähten - ein wirtschaftliches Verfahren zur Herstellung von Verbundwerkstoffschichten" von J. Hellwig und anderen, aus Schweißen und Schneiden, 1994, Heft 10, Seite 486 bis 491, ist ein Verfahren bekannt, bei dem im Wechsel zwei, drei oder vier Drähte in dem Spritzkopf gleichzeitig abgeschmolzen werden können. Durch die Verwendung mehrerer Drähte ist es möglich, in einer Bauteileinspannung Haft- und Funktionsschichten oder Füll- und Deckschichten aufzuspritzen.

Der Artikel "Lichtbogenspritzen von Aluminium" von D. Grasme, aus Schweißen und Schneiden, 1990, Heft 8, Seiten 390 bis 393, offenbart ein Verfahren zum Lichtbogenspritzen von Aluminium. Bei diesem bekannten Verfahren wird vorgeschlagen, die Einrichtung mit einem Gleichstrom zu betreiben, der bei einer flachen elektrostatischen Charakteristik eine extrem harte elektrodynamische Kennlinie aufweist welche eine Stromanstiegsgeschwindigkeit von ungefähr 10⁵ Amper pro Sekunde zeigt, während die statische Kennlinie sehr flach verläuft.

Bei allen zuvor beschriebenen Verfahren werden zur Energieversorgung der Spritzdrähte Gleichstromquellen eingesetzt.

Mit derartigen Verfahren können insbesondere Oberflächen von Werkstücken beschichtet werden. Die Beschichtungen können beispielsweise dazu dienen, sehr verschleißarme oder korrosionsunempfindliche Werkstückoberflächen zu erhalten oder bestimmte Formkörper auszubilden. Zur Ausbildung von Formkörpern ist es beispielsweise möglich, auf eine Kernform Metall aufzuspritzen, das nach dem Auskühlen und nach Entfernen der Kernform den gewünschten Formkörper, beispielsweise eine Buchse oder ähnliches, bildet. Insbesondere können Lichtbogenspritzverfahren auch dazu eingesetzt werden, elektrisch oder thermisch leitende Schichten oder auch isolierende Schichten auf Werkstückoberflächen oder dergleichen aufzubringen.

Nachteilig bei den bekannten Verfahren ist insbesondere, dass die auf diese Weise hergestellten Schichten typischerweise eine unerwünscht hohe Inhomogenität und Porosität aufweisen.

Dies beruht vor allem darauf, dass die Drähte, die bei einem Verfahren zum Lichtbogenspritzen oder Lichtbogen-Auftragsschweißen verwendet werden, ein äußerst unterschiedliches Abbrandverhalten aufweisen. Das unterschiedliche Abbrandverhalten ergibt sich insbesondere daraus, dass die Elektronenaustrittsenergien an der Kathode an dem ersten Draht und die Elektrodenaufprallenergie an der Anode an dem zweiten Draht äußerst unterschiedliche Temperaturen erzeugen. Das unterschiedliche Abbrandverhalten der Drähte führt im Bereich des Lichtbogens zu einer unkontrollierten Tropfenbildung, die letztlich zu einem instabilen Lichtbogen führt.

Aus der JP-01073066 ist ein Verfahren und eine Vorrichtung zum Lichtbogenspritzen von aus metallischen und nichtmetallischen Werkstoffen gebildeten Verbundschichten bekannt. Bei diesem bekannten Verfahren und dieser bekannten Vorrichtung werden mindestens drei Metallspritzelektroden in einem Spritzkopf zusammengeführt, während gleichzeitig ein nichtmetallisches Material zwischen den Elektroden positioniert ist. Die Elektroden sind an einen Drehstromgenerator angeschlossen und werden von diesem mit Drehstrom versorgt, wodurch zwischen den Elektroden ein Lichtbogen ausgebildet wird. Das aufgschmolzene Elektrodenmaterial und das durch den Lichtbogen aufgeschmolzene nichtmetallische Material werden durch einen Gasstrom auf die zu beschichtende Oberfläche geschleudert.

Der Erfindung liegt die Aufgabe zugrunde, ein Verfahren der eingangs genannten Art so auszubilden, dass ein möglichst reproduzierbarer, homogener Materialauftrag erhalten wird.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Bei dem erfindungsgemäßen Verfahren zur Erzeugung eines Materialauftrags auf einer Oberfläche mittels Lichtbogenspritzens werden zwei Drähte in einem Lichtbogen zumindest partiell geschmolzen. Dabei werden zur Energieversorgung die Drähte mit einem Strom gespeist, dessen Polarität beim Erzeugen des Lichtbogens definiert wechselt. Durch den Polaritätswechsel des Stroms wird erreicht, dass beide Drähte mit Strom versorgt werden und abbrennen. Die Polarität wird dabei so definiert gewechselt, dass die Drähte in zumindest annähernd symmetrischer Weise mit Strom versorgt werden, so dass die Drähte ein zumindest annähernd gleiches Abbrandverhalten zeigen. Durch das gleichmäßige Abbrandverhalten der Drähte werden unregelmäßige Tropfenbildungen im Bereich des Lichtbogens vermieden, so dass der Lichtbogen gleichbleibend stabil bleibt. Dadurch können Schichten mit hoher Homogenität und geringer Porosität erzeugt werden.

Der Strom kann dabei so in die Drähte eingespeist werden, dass er mit ständig wechselnder Polarität und Stärke fließt und beispielsweise einen sinusförmigen Verlauf zeigt.

Alternativ ist es auch möglich, eine Folge von Stromimpulsen mit alternierenden Vorzeichen in die Drähte einzuspeisen. Die Stromimpulse unterschiedlichen Vorzeichens werden dabei vorzugsweise phasengleich den einzelnen Drähten zugeführt.

Als bevorzugte Ausführungsform des erfindungsgemäBen Verfahrens wird als Energiequelle ein Strom mit alternierenden Stromimpulsen gewählt, bei welchen ein sehr steiler Übergang vom Minimalwert eines negativen Stromimpulses zu dem Maximalwert eines positiven Stromimpulses erfolgt.

Vorteilhafterweise werden zumindest näherungsweise rechteckförmige oder trapezförmige Stromimpulse verwendet, deren Stromanstiegszeiten vorzugsweise kleiner oder gleich 10 µsec sind.

Mit derartigen Stromimpulsen wird im Gegensatz zu sinusförmigen Strömen oder dergleichen ein abrupter Übergang von dem Minimalwert auf den Maximalwert des Stromes oder umgekehrt erreicht, so dass die Lichtbogentotzeit entsprechend gering ist, wodurch verglichen mit sinusförmigen Strömen ein noch stabiler Lichtbogen erhalten wird.

Durch das gleichmäßige Abbrandverhalten ergibt sich ferner der Vorteil, dass die Drähte mit Hilfe einer gemeinsamen Vorschubeinrichtung zugeführt werden können, wodurch sich sowohl der apparative als auch der steuerungstechnische Aufwand verglichen mit dem Aufwand bei den bisher verwendeten Lichtbogen-Spritzeinrichtungen deutlich reduziert.

Die Erfindung wird im Nachstehenden anhand der Zeichnungen erläutert. Darin zeigen:
- Fig. 1: eine schematische Darstellung einer Vorrichtung zum Lichtbogenspritzen mit einer Stromimpulse liefernden Energieversorgung;
- Fig. 2a-2c: verschiedene Ausführungsformen der Energieversorgung gemäß Fig. 1;
- Fig. 3a, 3b: verschiedene Ausführungsformen eines Gleichrichters für die Energieversorgung gemäß Fig. 3c; und
- Fig. 4: eine Ausführungsform eines Inverters für die Energieversorgung gemäß Fig. 2c.

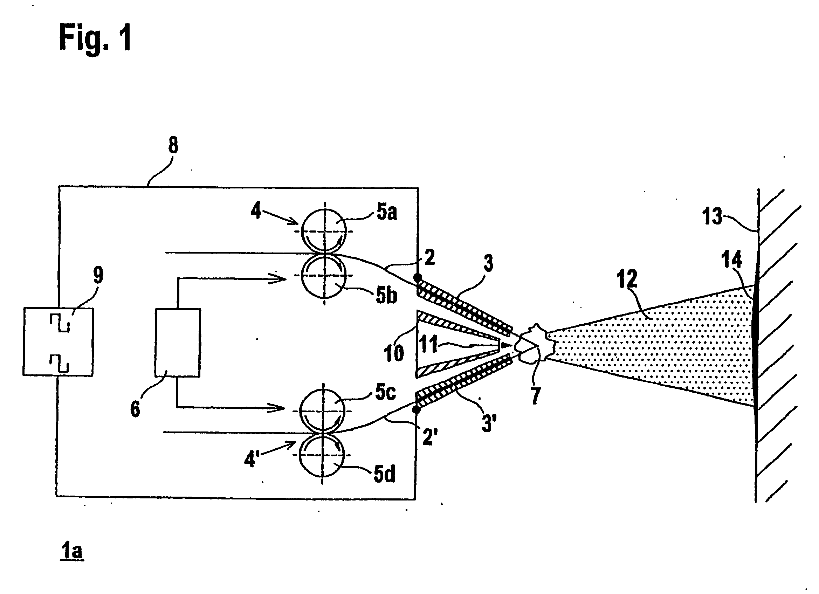

Fig. 1 zeigt schematisch ein Ausführungsbeispiel einer Vorrichtung 1a zum Lichtbogenspritzen.

Die Vorrichtung 1a weist zwei als Spritzdrähte'ausgebildete Drähte 2, 2' auf, deren Vorderenden in kontaktgebenden Drahtführungen 3, 3' geführt sind. Die Drahtführungen 3, 3' und damit die Vorderenden der Spritzdrähte laufen in spitzem Winkel aufeinander zu, so dass die Spitzen der über die Drahtführungen abstehenden Drähte 2, 2' in geringem Abstand einander gegenüberliegen.

Die Drähte 2, 2' werden durch die Drahtführungen 3, 3' mittels einer Vorschubeinrichtung synchron gefördert. Die Vorschubeinrichtung weist Rollenpaare 4, 4' auf, zwischen welchen die Drähte 2, 2' gefördert werden. Dabei besteht jedes Rollenpaar 4, 4' aus zwei aufeinanderliegenden Rollen 5a-d, die sich gegenläufig drehen, wodurch der jeweils im Spalt zwischen den Rollen 5a-d geförderte Draht 2, 2' gefördert wird. Bei dem in Fig. 1 dargestellten Ausführungsbeispiel ist ein erstes Rollenpaar 4 zur Förderung des ersten Drahtes 2 und ein zweites Rollenpaar 4' zur Förderung des zweiten Drahtes 2' vorgesehen. Prinzipiell können zur Förderung eines Drahtes 2,2' auch mehrere Rollenpaare 4, 4' vorgesehen sein.

Die Rollenpaare 4, 4' werden mittels eines Antriebs 6 angetrieben.

Mittels einer Energieversorgung werden die Spitzen der Drähte 2,2' in einem Lichtbogen 7 zumindest partiell geschmolzen. Die Energieversorgung umfasst einen Stromkreis mit Stromleitungen 8 und einer Stromquelle 9, in welcher erfindungsgemäß ein Strom mit definiert wechselnder Polarität erzeugt wird. Der Strom wechselnder Polarität wird über den Stromkreis den kontaktgebundenen Drahtführungen 3, 3' zugeführt.

Die angeschmolzenen Spitzen der Drähte 2, 2' werden mittels eines an einer Düse 10 austretenden Zerstäubergases 11 in einem Spritzstrahl 12 gegen eine Oberfläche 13; beispielsweise gegen eine Werkstückoberfläche oder gegen eine Kernform, geschleudert.

Dadurch entsteht ein Materialauftrag 14 auf der Oberfläche 13, ohne dass diese selbst angeschmolzen wird.

Als Zerstäubergas 11 wird typischerweise Druckluft oder Stickstoff verwendet. Die Drähte 2, 2' sind vorzugsweise identisch ausgebildet und bestehen typischerweise aus Aluminium oder Zink. Besonders vorteilhaft können auch Aluminium/Silizium-Drähte verwendet werden, wobei vorzugsweise Drähte 2, 2' eingesetzt werden, die eine mit Aluminium ummantelte Silizium-Füllung aufweisen.

Erfindungsgemäß wird in der Stromquelle 9 ein Strom wechselnder Polarität, beispielsweise eine Folge von Stromimpulsen mit alternierenden Vorzeichen, generiert, welcher vorzugsweise phasengleich den kontaktgebenden Drahtführungen 3, 3' zugeführt wird.

Mit der erfindungsgemäßen Energieversorgung der Drahtführungen 3, 3' werden bei der Vorrichtung 1a zum Lichtbogenspritzen die Drähte 2, 2' in symmetrischer Weise mit Strom versorgt, wodurch ein symmetrisches und gleichmäßiges Abbrandverhalten beider Drähte 2, 2' erreicht wird.

Besonders vorteilhaft wird ein Strom zugeführt, der aus einer Folge von Rechteck-Impulsen mit welchselnden Vorzeichen besteht. Prinzipiell können die Stromimpulse auch aus einer Folge von trapezförmigen Impulsen bestehen. In jedem Fall sind die positiven und negativen Impulse vorzugsweise jeweils identisch ausgebildet.

Wesentlich bei der Form der Stromversorgung mit Rechteck-Impulsen ist, dass die Stromimpulse eine möglichst kurze Stromanstiegszeit aufweisen, das heißt, dass die Stromimpulse möglichst steile Flanken aufweisen. Die Stromanstiegszeiten liegen hierbei in einem Bereich von etwa 3 bis 100 µsec. Besonders vorteilhaft betragen die Stromanstiegszeiten maximal etwa 10 µsec, wobei die typischen Pulsfolgefrequenzen der Stromimpulse vorzugsweise im Bereich zwischen 50 Hz bis 300 Hz liegen. Die Amplituden der Stromimpulse liegen typischerweise im Bereich zwischen 100 A und 800 A.

Bei den so ausgebildeten Stromimpulsen wird durch die abrupten Übergänge zwischen den Maximalwerten und Minimalwerten des Stromes erreicht, dass nahezu die gesamte Periode eines Stromimpulses der betragsmäßige Maximalwert des Stromes an den kontaktgebenden Drahtführungen 3, 3' anliegt, wodurch geringe Lichtbogentotzeiten die typischerweise im µsec-Bereich liegen, erhalten werden. Dadurch wird ein stabiler Lichtbogen 7 erhalten, wodurch bei der Materialauftragung auf der jeweiligen Oberfläche 13 homogene Schichten mit geringer Porosität erzeugt werden.

Ein weiterer Vorteil bei der Verwendung der erfindungsgemäßen Energieversorgung besteht darin, dass durch das gleichmäßige Abbrandverhalten die beiden Drähte 2, 2' über die Vorschubeinrichtung synchron gefördert werden können. Dies verringert den baulichen Aufwand für die Vorschubeinrichtung. Insbesondere ist damit für den Antrieb der Rollenpaare 4, 4' der Vorschubeinrichtung ein einzelner Antrieb 6 ausreichend.

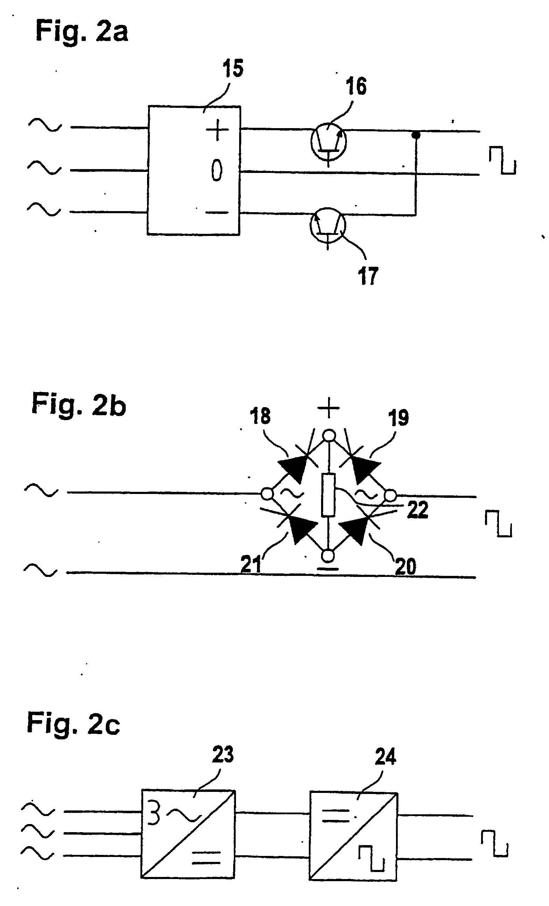

In den Fig.2a - 2c sind Ausführungsbeispiele der erfindungsgemäßen Stromquelle dargestellt. Generell eignen sich hierbei besonders Stromquellen mit Konstantspannungsverhalten.

Bei dem in Fig. 2a dargestellten Ausführungsbeispiel der Stromquelle wird mittels einer Mittelpunktschaltung 15 und zwei nachgeordneten Transistoren 16, 17 eine Folge von rechteckförmigen Stromimpulsen erzeugt, wobei die Transistoren 16, 17 zur Polwechselung der Stromimpulse dienen.

Bei dem in Fig. 2b dargestellten Ausführungsbeispiel umfasst die Stromquelle eine Brückenschaltung, die an die Sekundärseite eines nicht dargestellten Transformators angeschlossen ist. Die Brückenschaltung umfasst vier Thyristoren 18, 19, 20, 21 und eine Drossel 22.

Die Stromquelle gemäß Fig. 2c umfasst einen Gleichrichter 23 sowie einen diesem nachgeschalteten Inverter 24.

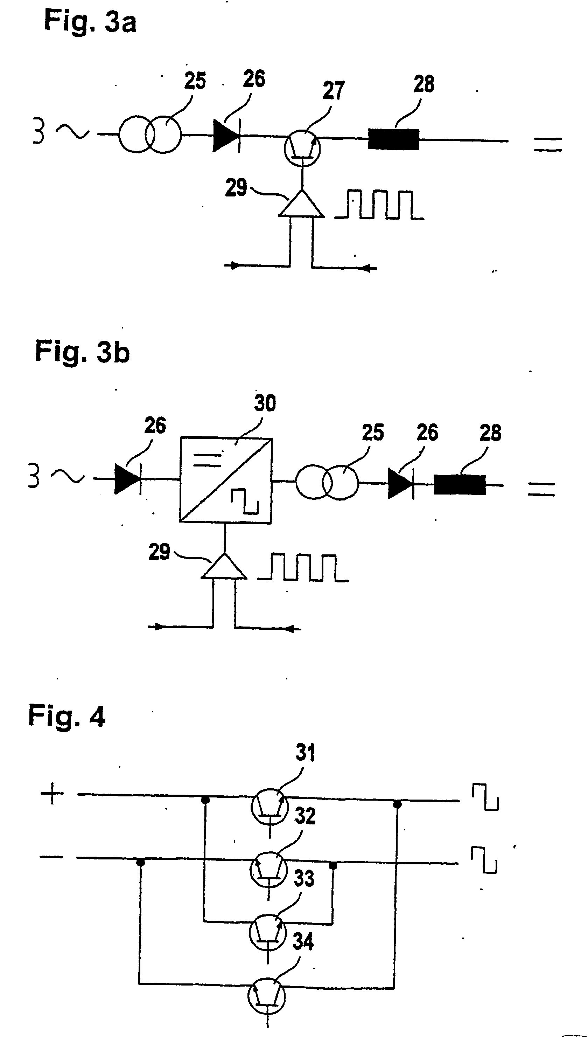

In den Fig. 3a und 3b sind zwei Ausführungsbeispiele von Gleichrichtern 23 für die Stromquelle gemäß Fig.2a dargestellt.

Fig. 3a zeigt einen sekundär getakteten Gleichrichter. Dieser weist einen Netztransformator 25 mit einer nachgeschalteten Diode 26, einen Transistor 27 und eine Drossel 28 auf. über einen Taktgeber 29 sind auf den Transistor Taktimpulse geführt, deren Taktimpulsfrequenz typischerweise oberhalb von 16 kHz liegt. Fig. 3b zeigt einen primär getakteten Gleichrichter. Dieser weist im Wesentlichen dieselben Komponenten wie der Gleichrichter gemäß Fig. 3a auf. Lediglich der Transistor 27 gemäß Fig. 3a ist in Fig 3b durch einen Inverter 30 ersetzt, der von dem Taktgeber 29 angesteuert ist.

Der Inverter 30 ist zwischen der Diode 26 und dem Netztransformator 25 angeordnet, welchem die Drossel 28 nachgeordnet ist.

Fig. 4 zeigt eine Ausführungsform des Inverters für die Stromquelle gemäß Fig. 2c. Der Inverter besteht dabei aus einer Schaltung mit vier Transistoren 31, 32, 33, 34.

## Patentansprüche

1. Verfahren zur Erzeugung eines Materialauftrags auf einer Oberfläche mittels Lichtbogenspritzens, bei dem nur zwei Drähte in einem Lichtbogen zumindest partiell geschmolzen werden, wobei
der zur Energieversorgung der Drähte.(2, 2') eingespeiste Strom beim Erzeugen des Lichtbogens in seiner Polarität definiert wechselt, und die Stromausstiegszeit vom minimalen bis zum maximalen Wert des Stroms in einem Bereich von 3 µsec bis 100 µsec Liegt.

2. Verfahren nach Anspruch 1,
**dadurch gekennzeichnet,**
**dass** der Strom aus einer Folge von Stromimpulsen mit alternierenden Vorzeichen besteht.

3. Verfahren nach Anspruch 2,
**dadurch gekennzeichnet,**
**dass** der Strom aus einer Folge von jeweils identischen positiven und negativen Stromimpulsen gebildet ist.

4. Verfahren nach einem der Ansprüche 2 oder 3,
**dadurch gekennzeichnet,**
**dass** der Strom aus einer Folge von Rechteck-Impulsen besteht.

5. Verfahren nach einem der Ansprüche 2 oder 3,
**dadurch gekennzeichnet,**
**dass** der Strom aus einer Folge von trapezförmigen Impulsen besteht.

6. Verfahren nach einem der Ansprüche 1 bis 4,
**dadurch gekennzeichnet,**
**dass** die Stromanstiegszeit kleiner oder gleich 10 µsec ist.

7. Verfahren nach einem der Ansprüche 1 bis 6,
**dadurch gekennzeichnet,**
**dass** zur Energieversorgung eine Stromquelle mit konstantspannungsverhalten verwendet wird.

8. Verfahren nach Anspruch 7,
**dadurch gekennzeichnet,**
**dass** als Stromquelle eine Mittelpunktschaltung (15) mit zwei Transistoren (16, 17) zur Polwechslung des Stromes verwendet wird.

9. Verfahren nach Anspruch 7,
**dadurch gekennzeichnet,**
**dass** als Stromquelle eine Schaltungsanordnung mit einer aus Thyristoren (18 bis 21) gebildeten Brückenschaltung verwendet wird.

10. Verfahren nach Anspruch 7,
**dadurch gekennzeichnet,**
**dass** als Stromquelle ein Gleichrichter (23) mit einem diesem nachgeordneten Inverter (24) verwendet wird.

11. Verfahren nach einem der Ansprüche 2 bis 10,
**dadurch gekennzeichnet,**
**dass** die Pulsfolgefrequenz der Stromimpulse in einem Bereich zwischen 30 und 1000 Hz, vorzugsweise in einem Bereich zwischen 50 Hz und 300 Hz liegt.

12. Verfahren nach einem der Ansprüche 1 bis 11,
**dadurch gekennzeichnet,**
**dass** die Stromamplitude im Bereich zwischen 100 und 800 A liegt.

13. Verfahren nach einem der Ansprüche 1 bis 12,
**dadurch gekennzeichnet,**
**dass** die Drähte (2, 2') mittels einer Vorschubeinrichtung synchron gefördert werden.

14. Verfahren nach Anspruch 13,
**dadurch gekennzeichnet,**
**dass** die Vorschubeinrichtung Rollenpaare (4, 4') aufweist, wobei zwischen ersten Rollenpaaren (4) der erste Draht (2) und zwischen zweiten Rollenpaaren (4') der zweite Draht (2') gefördert wird.

15. Verfahren nach Anspruch 14,
**dadurch gekennzeichnet,**
**dass** die ersten und zweiten Rollenpaare (4, 4') von einem gemeinsamen Antrieb (6) angetrieben werden.

16. Verfahren nach einem der Ansprüche 1 bis 15,
**dadurch gekennzeichnet,**
**dass** für eine Materialauftragung mittels Lichtbogenspritzens als Spritzdrähte ausgebildete Drähte (2, 2') verwendet werden; die aus Aluminium, Aluminium/Silizium oder Zink bestehen.

17. Verfahren nach Anspruch 16,
**dadurch gekennzeichnet,**
**dass** aus Aluminium/Silizium bestehende Spritzdrähte eine mit Aluminium ummantelte Silizium-Füllung aufweisen.

## Claims

1. Method for producing a material deposition on a surface by means of arc spraying in which only two wires are at least partially melted in an arc, wherein the current fed in for the energy supply of the wires (2, 2') changes its polarity in a defined manner during the generation of the arc and the current rise time from the minimum value of the current up to the maximum value of the current lies in the range from ca. 3 µsec to 100 µsec.

2. Method in accordance with claim 1,
**characterised in that**
the current consists of a sequence of current pulses with alternating signs.

3. Method in accordance with claim 2,
**characterised in that**
the current is formed from a sequence of respectively identical positive and negative current pulses.

4. Method in accordance with one of the claims 2 or 3,
**characterised in that**
the current consists of a sequence of rectangular pulses.

5. Method in accordance with one of the claims 2 or 3,
**characterised in that**
the current consists of a sequence of trapezoidal pulses.

6. Method in accordance with one of the claims 1 to 4,
**characterised in that**
the current rise time is smaller than or equal to 10 µsec.

7. Method in accordance with one of the claims 1 to 6,
**characterised in that**
a current source with constant voltage behaviour is used for the energy supply.

8. Method in accordance with claim 7,
**characterised in that**
a centre point circuit (15) with two transistors (16, 17) for the change of the polarity of the current is used as the current source.

9. Method in accordance with claim 7,
**characterised in that**
a circuit arrangement with a bridge circuit formed of thyristors (18 to 21) is used as the current source.

10. Method in accordance with claim 7,
**characterised in that**
a rectifier (23) followed by an inverter (24) is used as the current source.

11. Method in accordance with one of the claims 2 to 10,
**characterised in that**
the pulse sequence frequency of the current pulses lies in a range between 30 Hz and 1000 Hz, preferably in a range between 50 Hz and 300 Hz.

12. Method in accordance with one of the claims 1 to 11,
**characterised in that**
the current amplitude lies in the range between 100 A and 800 A.

13. Method in accordance with one of the claims 1 to 12,
**characterised in that**
the wires (2, 2') are synchronously conveyed by means of a feed device.

14. Method in accordance with claim 13,
**characterised in that**
the feed device has roller pairs (4, 4'), with the first wire (2) being conveyed between first roller pairs (4) and the second wire (2') between second roller pairs (4').

15. Method in accordance with claim 14,
**characterised in that**
the first and second roller pairs (4, 4') are driven by a common drive (6).

16. Method in accordance with one of the claims 1 to 15,
**characterised in that**
wires (2, 2'), which consist of aluminium, aluminium/silicon or zinc, are used for a material deposition by means of arc spraying.

17. Method in accordance with claim 16,
**characterised in that**
spraying wires consisting of aluminium/ silicon have a silicon filling clad with aluminium.

## Revendications

1. Procédé de production d'un placage de matière sur une surface au moyen d'un procédé de pulvérisation à arc électrique, pour lequel deux fils seulement sont fondus au moins partiellement dans un arc électrique, sachant que le courant introduit pour l'alimentation en énergie des fils (2, 2') change de polarité de façon définie lors de la génération de l'arc électrique et que le temps de montée du courant de la valeur minimale à la valeur maximale du courant est compris dans un intervalle de 3 µs à 100 µs.

2. Procédé selon la revendication 1, **caractérisé en ce que** le courant consiste en une suite d'impulsions de courant de signe alterné.

3. Procédé selon la revendication 2, **caractérisé en ce que** le courant consiste en une suite d'impulsions de courant positives et négatives respectivement identiques.

4. Procédé selon l'une quelconque des revendications 2 ou 3, **caractérisé en ce que** le courant consiste en une suite d'impulsions de courant rectangulaires.

5. Procédé selon l'une quelconque des revendications 2 ou 3, **caractérisé en ce que** le courant consiste en une suite d'impulsions de courant trapézoïdales.

6. Procédé selon l'une quelconque des revendications 1 à 4, **caractérisé en ce que** le temps de montée du courant est inférieur ou égal à 10 µs.

7. Procédé selon l'une quelconque des revendications 1 à 6, **caractérisé en ce que** pour l'alimentation en courant est utilisée une source de courant à comportement de tension constante.

8. Procédé selon la revendication 7, **caractérisé en ce que**, comme source de courant est utilisée une prise médiane (15) avec deux transistors (16, 17) pour l'inversion de polarité du courant.

9. Procédé selon la revendication 7, **caractérisé en ce que**, comme source de courant est utilisé un montage avec un circuit en pont formé de thyristors (18 à 21).

10. Procédé selon la revendication 7, **caracterisé en ce que** comme source de courant est utilisé un redresseur (23) avec un circuit inverseur (24) en aval de celui-ci.

11. Procédé selon l'une quelconque des revendications 2 à 10, **caractérisé en ce que** la fréquence de succession des impulsions de courant est comprise dans un intervalle entre 30 et 1000 Hz, de préférence dans un intervalle entre 50 Hz et 300 Hz.

12. Procédé selon l'une quelconque des revendications 1 à 11, **caractérisé en ce que** l'amplitude du courant est comprise dans un intervalle entre 100 et 800 A.

13. Procédé selon l'une quelconque des revendications 1 à 12, **caractérisé en ce que** les fils (2, 2') sont transportés de façon synchrone au moyen d'un dispositif d'avance.

14. Procédé selon la revendication 13, **caractérisé en ce que** le dispositif d'avance comporte des paires de rouleaux (4, 4'), sachant que le premier fil (2) est transporté entre les premières paires de rouleaux (4) et le deuxième fil (2') entre les deuxièmes paires de rouleaux (4').

15. Procédé selon la revendication 14, **caractérisé en ce que** les premières et deuxièmes paires de rouleaux (4, 4'), sont entraînées par un entraînement (6) commun.

16. Procédé selon l'une quelconque des revendications 1 à 15, **caractérisé en ce que** pour un dépôt de matière au moyen de la pulvérisation par arc électrique, on utilise des fils (2, 2') configurés comme fils de pulvérisation, qui sont constitués d'aluminium, d'aluminium/silicium ou de zinc.

17. Procédé selon la revendication 16, **caractérisé en ce que** les fils de pulvérisation constitués d'aluminium/silicium comportent une âme de silicium gainée d'aluminium.
